(19) Europäisches Patentamt
European Patent Office
Office européen des brevets

(11) EP 4 636 038 A1

(12) EUROPEAN PATENT APPLICATION

(43) Date of publication:
**22.10.2025 Bulletin 2025/43**

(21) Application number: **24171201.7**

(22) Date of filing: **19.04.2024**

(51) International Patent Classification (IPC):
***C08L 69/00*** *(2006.01)*

(52) Cooperative Patent Classification (CPC):
(C-Sets available)
**C08L 69/00;** C08L 2201/02; C08L 2205/025;
C08L 2205/03 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **SHPP Global Technologies B.V.**
**4612 PX Bergen op Zoom (NL)**

(72) Inventors:
- **Chen, Keran**
  **Shanghai (CN)**
- **Shan, Wei**
  **Shanghai (CN)**
- **Zheng, Yun**
  **Shanghai (CN)**

(74) Representative: **Modiano, Gabriella Diana et al**
**Modiano & Partners SA**
**Steinsdorfstraße 14**
**80538 München (DE)**

## (54) POST-CONSUMER RECYCLED POLYCARBONATE COMPOSITIONS HAVING GOOD DUCTILITY AND FLAME RETARDANT PROPERTIES

(57) Thermoplastic compositions include: (a) from about 10 wt% to about 85 wt% of a mechanically recycled polycarbonate; (b) from about 2 wt% to about 15 wt% of a polycarbonate-siloxane (PC-Si) copolymer, wherein the PC-Si copolymer has a siloxane content of at least 25 wt%; (c) from about 0.1 wt% to about 20 wt% of a flame retardant component; and (d) from about 0.01 wt% to about 2 wt% of an anti-drip agent comprising polytetrafluoroethylene (PTFE). The combined weight percent value of all components does not exceed 100 wt%, and all weight percent values are based on the total weight of the composition.

EP 4 636 038 A1

(52) Cooperative Patent Classification (CPC): (Cont.)

C-Sets
**C08L 69/00, C08L 69/00, C08L 83/10, C08K 5/523, C08K 3/346, C08K 5/5399, C08L 27/18, C08L 55/02;**
**C08L 69/00, C08L 69/00, C08L 83/10, C08K 5/523, C08K 3/346, C08L 27/18, C08L 55/02;**
**C08L 69/00, C08L 83/10, C08K 5/0066, C08L 27/18**

## Description

### FIELD OF THE DISCLOSURE

The present disclosure relates to polycarbonate compositions, and in particular to post-consumer recycled polycarbonate compositions including a polycarbonate-siloxane copolymer that have good ductility and flame retardant properties.

### BACKGROUND OF THE DISCLOSURE

Polycarbonate is a popular plastic in the consumer electronics (CE) market due to its balance of flame retardant, impact and other properties. Flame retardant additives are incorporated to improve the flame retardance (FR) of the polymer for CE applications. However, to achieve a high thin wall FR rating (e.g., UL94 V0 at 0.8 millimeter or less), the FR loading must be so high that impact performance can be reduced.

Additionally, more customers in the CE market are seeking more sustainable components to improve the green footprint in their products. Use of post-consumer recycled (PCR) plastics could potentially satisfy the customer's expectation in this market. However, compositions including PCR plastics-and in particular those with a high recycle content-do not provide sufficient FR and mechanical properties for many CE applications due to the poor mechanical properties of the PCR material as compared to virgin plastics.

These and other shortcomings are addressed by aspects of the present disclosure.

### SUMMARY

Aspects of the disclosure relate to thermoplastic compositions including: (a) from about 10 wt% to about 85 wt% of a mechanically recycled polycarbonate; (b) from about 2 wt% to about 15 wt% of a polycarbonate-siloxane (PC-Si) copolymer, wherein the PC-Si copolymer has a siloxane content of at least 25 wt%; (c) from about 0.1 wt% to about 20 wt% of a flame retardant component; and (d) from about 0.01 wt% to about 2 wt% of an anti-drip agent comprising polytetrafluoroethylene (PTFE). The combined weight percent value of all components does not exceed 100 wt%, and all weight percent values are based on the total weight of the composition.

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a mechanically recycled

polycarbonate" includes mixtures of two or more mechanically recycled polycarbonate polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i M_i^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula:

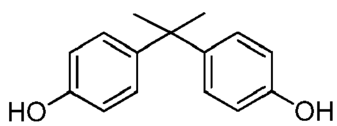

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

## Thermoplastic Compositions

Aspects of the disclosure relate to thermoplastic compositions including: (a) from about 10 wt% to about 85 wt% of a mechanically recycled polycarbonate; (b) from about 2 wt% to about 15 wt% of a polycarbonate-siloxane (PC-Si) copolymer, wherein the PC-Si copolymer has a siloxane content of at least 25 wt%; (c) from about 0.1 wt% to about 20 wt% of a flame retardant component; and (d) from about 0.01 wt% to about 2 wt% of an anti-drip agent including polytetrafluoroethylene (PTFE). The combined weight percent value of all components does not exceed 100 wt%, and all weight percent values are based on the total weight of the composition.

Any desired mechanically recycled polycarbonate may be used in the composition. In one example the mechanically recycled polycarbonate is a post-consumer recycled polycarbonate (CAS No. 25037-45-0), available from

Ningbo Hongyu. In certain aspects the composition includes at least 10 wt%, or at least 15 wt%, or at least 20 wt%, or at least 25 wt%, or at least 30 wt%, or at least 35 wt%, or at least 40 wt%, or at least 45 wt%, or at least 50 wt%, or at least 55 wt%, or at least 60 wt%, or at most 85 wt%, or at most 80 wt%, or at most 75 wt%, or at most 70 wt%, of the mechanically recycled polycarbonate. In a specific aspect the composition includes from about 50 wt% to about 85 wt% of the mechanically recycled polycarbonate.

The polycarbonate-siloxane copolymer has a siloxane content of at least 25 wt%, based on the total weight of the polycarbonate-siloxane copolymer component. In further aspects the polycarbonate-siloxane copolymer has a siloxane content of at least 30 wt%, or at least 35 wt%, or at least 38 w%, or at most 60 wt%, or at most 55 wt%, or at most 50 wt%, or at most 45 wt%, or at most 42 wt%, or about 40 wt%. An exemplary polycarbonate-siloxane copolymer having a siloxane content of 40 wt% is available from SABIC.

The composition includes from about 2 wt% to about 15 wt% of the polycarbonate-siloxane copolymer. In some aspects the composition includes at least 2 wt%, or at least 3 wt%, or at least 4 wt%, or at least 5 wt%, or at least 6 wt%, or at least 7 wt%, or at most 15 wt%, or at most 14 wt%, or at most 13 wt%, or at most 12 wt%, or at most 11 wt%, or at most 10 wt%, or at most 9 wt%, or at most 8 wt%, or at most 7 wt%, of the polycarbonate-siloxane copolymer.

The composition includes from about 0.1 wt% to about 20 wt% of a flame retardant component. The flame retardant component includes a phosphate in some aspects. In specific aspects the phosphate includes bisphenol A bis(diphenyl phosphate) (BPADP). In some aspects the composition further includes a polyphosphazene (PPZ). An example polyphosphazene is hexaphenoxycyclotriphosphazene. The composition may in other aspects include at least 0.5 wt%, or at least 1 wt%, or at least 2 wt%, or at least 3 wt%, or at least 4 wt%, or at least 5 wt%, or at least 6 wt%, or at least 7 wt%, or at least 8 wt%, or at least 9 wt%, or at least 10 wt%, or at least 11 wt%, or at least 12 wt%, or at most 20 wt%, or at most 19 wt%, or at most 18 wt%, or at most 17 wt%, or at most 16 wt%, or at most 15 wt%, or at most 14 wt%, or at most 13 wt%, or at most 12 wt%, or at most 11 wt%, of the flame retardant component.

In some aspects the composition includes from greater than 0 wt% to about 75 wt% of at least one virgin polycarbonate. The virgin polycarbonate may include a polycarbonate homopolymer or a polycarbonate copolymer different from the polycarbonate-siloxane copolymer. In particular aspects the composition includes at least 0.1 wt%, or at least 0.5 wt%, or at least 1 wt%, or at least 2 wt%, or at least 3 wt%, or at least 4 wt%, or at least 5 wt%, or at least 6 wt%, or at least 7 wt%, or at most 75 wt%, or at most 70 wt%, or at most 65 wt%, or at most 60 wt%, or at most 55 wt%, or at most 50 wt%, or at most 45 wt%, or at most 40 wt%, or at most 35 wt%, or at most 30 wt%, or at most 25 wt%, or at most 20 wt%, or at most 19 wt%, or at most 18 wt%, or at most 17 wt%, or at most 16 wt%, or at most 15 wt%, or at most 14 wt%, or at most 13 wt%, or at most 12 wt%, or at most 11 wt%, or at most 10 wt%, or at most 9 wt%, or at most 8 wt%, or at most 7 wt%, or at most 6 wt%, or the at least one virgin polycarbonate. In specific aspect the composition includes from greater than 0 wt% to about 20 wt% of the at least one virgin polycarbonate, or less than 10 wt% of the at least one virgin polycarbonate.

The composition includes from about 0.01 wt% to about 2 wt% of an anti-drip agent including polytetrafluoroethylene (PTFE) in some aspects. An exemplary anti-drip agent is a styrene acrylonitrile (SAN)-encapsulated polytetrafluoroethylene (PTFE) copolymer. In certain aspects the composition includes at least 0.1 wt%, or at least 0.2 wt%, or at least 0.3 wt%, or at least 0.4 wt%, or at least 0.5 wt%, or at least 0.6 wt%, or at least 0.7 wt%, or at least 0.8 wt%, or at least 0.9 wt%, or at least 1.0 wt%, or at most 2.0 wt%, or at most 1.9 wt%, or at most 1.8 wt%, or at most 1.7 wt%, or at most 1.6 wt%, or at most 1.5 wt%, or at most 1.4 wt%, or at most 1.3 wt%, or at most 1.2 wt%, or at most 1.1 wt%, or at most 1.0 wt%, or at most 0.9 wt%, or at most 0.8 wt%, or at most 0.7 wt%, or at most 0.6 wt%, of the anti-drip agent.

In other aspects the composition includes from greater than 0 wt% to about 10 wt% of an inorganic filler. An exemplary filler includes, but is not limited to, talc. Inorganic fillers may improve flame retardant properties, but may adversely effect impact strength. In certain aspects the composition includes at least 0.1 wt%, or at least 0.2 wt%, or at least 0.3 wt%, or at least 0.4 wt%, or at least 0.5 wt%, or at least 1.0 wt%, or at least 2 wt%, or at least 3 wt%, or at least 4 wt%, or at least 5 wt%, or at least 6 wt%, or at most 10 wt%, or at most 9 wt%, or at most 8 wt%, or at most 7 wt%, or at most 6 wt%, or at most 5 wt%, of the organic filler.

Compositions according to aspects of the disclosure may include at least one additional additive. The at least one additional additive may include, but is not limited to, an acid scavenger, an antioxidant, an antistatic agent, a chain extender, a colorant, a release agent, a flow promoter, a lubricant, a plasticizer, a quenching agent, an additional flame retardant, a UV reflecting additive, an impact modifier, a blowing agent, a reinforcing agent, or a combination thereof.

In particular aspects the composition includes from about 0.1 wt% to about 10 wt% of the at least one additional additive. In specific aspects the composition includes at least 0.1 wt%, or at least 0.2 wt%, or at least 0.3 wt%, or at least 0.4 wt%, or at least 0.5 wt%, or at least 0.5 wt%, or at least 0.7 wt%, or at least 0.8 wt%, or at least 0.9 wt%, or at least 1 wt%, or at least 1.5 wt%, or at least 2 wt%, or at least 2.5 wt%, or at least 3 wt%, or at most 10 wt%, or at most 9 wt%, or at most 8 wt%, or at most 7 wt%, or at most 6 wt%, or at most 5 wt%, or at most 4 wt%, or the at least one additional additive.

In some aspects the composition includes at least 50 wt% recycled content. In other aspects the composition includes at least 55 wt%, or at least 60 wt%, or at least 65 wt% recycled content. A higher recycled content means that the composition is more sustainable, which may be desirable in certain aspects.

Compositions according to aspects of the disclosure may have a V0 flame retardant rating at a thickness of 0.75

mm, or at a thickness of 0.6 mm, as evaluated in accordance with UL94.

In further aspects the composition has a notched Izod impact (NII) strength of at least 275 joules per meter (J/m) at 23 °C, or a NII strength of at least 95 J/m at 0 °C, as evaluated at the indicated temperature in accordance with ASTM D256.

In specific aspects the composition has an NII strength of at least 285 J/m, or at least 295 J/m, or at least 325 J/m, or at least 350 J/m, or at least 375 J/m, or at least 400 J/m, or at least 425 J/m, or at least 450 J/m, or at least 475 J/m, or at least 500 J/m, or at least 525 J/m, or at least 550 J/m, or at most 750 J/m, or at most 700 J/m, or at most 650 J/m, or at most 600 J/m, at 23 °C as evaluated in accordance with ASTM D256.

In particular aspects the composition has an NII strength of at least 95 J/m, or at least 96 J/m, or at least 97 J/m, or at least 98 J/m, or at least 99 J/m, or at least 100 J/m, or at least 101 J/m, or at least 102 J/m, or at least 103 J/m, or at least 104 J/m, or at least 105 J/m, or at least 106 J/m, or at least 107 J/m, or at least 108 J/m, or at least 109 J/m, or at least 110 J/m, or at least 111 J/m, or at least 112 J/m, or at most 130 J/m, or at most 125 J/m, or at most 120 J/m, or at most 115 J/m, at 0 °C as evaluated in accordance with ASTM D256.

## Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

## Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded.

In certain aspects the article is a component of a consumer electronics (CE) device.

Various combinations of elements of this disclosure are encompassed by this disclosure, e.g., combinations of elements from dependent claims that depend upon the same independent claim.

**Aspects of the Disclosure**

In various aspects, the present disclosure pertains to and includes at least the following aspects.

Aspect 1. A thermoplastic composition comprising:

a. from about 10 wt% to about 85 wt% of a mechanically recycled polycarbonate;
b. from about 2 wt% to about 15 wt% of a polycarbonate-siloxane (PC-Si) copolymer, wherein the PC-Si copolymer has a siloxane content of at least 25 wt%;
c. from about 0.1 wt% to about 20 wt% of a flame retardant component; and
d. from about 0.01 wt% to about 2 wt% of an anti-drip agent comprising polytetrafluoroethylene (PTFE),

wherein the combined weight percent value of all components does not exceed 100 wt%, and all weight percent values are based on the total weight of the composition.

Aspect 2. The thermoplastic composition according to Aspect 1, wherein the composition comprises from about 50 wt% to about 85 wt% of the mechanically recycled polycarbonate.

Aspect 3. The thermoplastic composition according to Aspect 1 or 2, wherein the PC-Si copolymer has a siloxane content of from 25 wt% to 60 wt%.

Aspect 4. The thermoplastic composition according to any of Aspects 1 to 3, wherein the PC-Si copolymer has a siloxane content of from 35 wt% to 45 wt%.

Aspect 5. The thermoplastic composition according to any of Aspects 1 to 4, wherein the composition comprises from about 5 wt% to about 15 wt% of the PC-Si copolymer.

Aspect 6. The thermoplastic composition according to any of Aspects 1 to 5, wherein the flame retardant component comprises a phosphate.

Aspect 7. The thermoplastic composition according to Aspect 6, wherein the phosphate comprises bisphenol A bis(diphenyl phosphate) (BPADP).

Aspect 8. The thermoplastic composition according to Aspect 6 or 7, wherein the flame retardant component further comprises polyphosphazene.

Aspect 9. The thermoplastic composition according to any of Aspects 1 to 8, wherein the composition further comprises from greater than 0 wt% to about 75 wt% of at least one virgin polycarbonate.

Aspect 10. The thermoplastic composition according to Aspect 9, wherein the composition comprises from greater than 0 wt% to about 20 wt% of the at least one virgin polycarbonate.

Aspect 11. The thermoplastic composition according to Aspect 9 or 10, wherein the composition comprises less than 10 wt% of the at least one virgin polycarbonate.

Aspect 12. The thermoplastic composition according to any of Aspects 1 to 11, wherein the PTFE comprises a styrene acrylonitrile (SAN)-encapsulated polytetrafluoroethylene (PTFE) copolymer.

Aspect 13. The thermoplastic composition according to any of Aspects 1 to 12, wherein the composition further comprises from greater than 0 wt% to about 10 wt%, or from about 5 wt% to about 10 wt%, of an inorganic filler.

Aspect 14. The thermoplastic composition according to Aspect 13, wherein the inorganic filler comprises talc.

Aspect 15. The thermoplastic composition according to any of Aspects 1 to 14, wherein the composition comprises at least one additional additive.

Aspect 16. The thermoplastic composition according to Aspect 15, wherein the at least one additional additive comprises an acid scavenger, an antioxidant, an antistatic agent, a chain extender, a colorant, a release agent, a flow promoter, a lubricant, a plasticizer, a quenching agent, an additional flame retardant, a UV reflecting additive, an impact modifier, a blowing agent, a reinforcing agent, or a combination thereof.

Aspect 17. The thermoplastic composition according to Aspect 15 or 16, wherein the composition comprises from about 0.1 wt% to about 10 wt% of the at least one additional additive.

Aspect 18. The thermoplastic composition according to any of Aspects 1 to 17, wherein the composition comprises at least 50 wt% recycled content.

Aspect 19. The thermoplastic composition according to any of Aspects 1 to 18, wherein the composition has a V0 flame retardant rating at a thickness of 0.75 mm, or at a thickness of 0.6 mm, as evaluated in accordance with UL94.

Aspect 20. The thermoplastic composition according to any of Aspects 1 to 19, wherein the composition has a notched Izod impact (NII) strength of at least 275 joules per meter (J/m) at 23 °C, or a NII strength of at least 95 J/m at 0 °C, as evaluated at the indicated temperature in accordance with ASTM D256.

Aspect 21. An article comprising the thermoplastic composition according to any of Aspects 1 to 20.

Aspect 22. The article according to Aspect 21, wherein the article is a component of a consumer electronics device.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Compositions prepared and evaluated herein included one or more of the components listed in Table 1:

**Table 1 - Components**

| Component | Description | Source | Function |
|---|---|---|---|
| PC | PCP 1300, 100 Grade PCP Polycarbonate, CAS No. 111211-39-3 | SABIC | Resin |
| PC-Si (20%) | EXL polycarbonate-siloxane copolymer, 20 wt% siloxane, CAS No. 202483-49-6 | SABIC | Resin |
| PC-Si (40%) | 40wt% Siloxane -Polycarbonate copolymer, CAS No. 202483-49-6 | SABIC | Resin |
| PCR-PC | Post-consumer recycled polycarbonate, CAS No. 25037-45-0 | Ningbo Hongvu | Resin |
| Talc | Jetfine® 3 CA talc, CAS No. 14807-96-6 | Imerys | Filler |
| BPADP | Bisphenol A bis(diphenyl phosphate) , CAS No. 5945-33-5 | Daihachi | FR |
| PPZ | Hexaphenoxycyclotriphosphazene FP-110T, CAS No. 1184-10-7 | Fushimi | FR |
| ABS | Acrylonitrile butadiene styrene, CAS No. 9003-56-9 | Kumho | Resin |
| TSAN | Styrene acrylonitrile (SAN)-encapsulated polytetrafluoroethylene (PTFE) copolymer, CAS Nos. 9002-84-0/9003-54-7 | SABIC | Anti-drip |
| AO1076 | n-Octadecyl-β- (4-hydroxy-3,5-di-tert-butyl-phenyl)-propionate, CAS No. 2082-79-3 | BASF | Antioxidant |
| AO168 | Tris(2,4-ditert-butylphenyl) phosphate, CAS No. 31570-04-4 | BASF | Antioxidant |
| PETS | Pentaerythritol tetrastearate, CAS No. 115-83-3 | FACI | Mold release |

Compositions described herein were extruded into pellets and then injection molded into samples for the indicated tests. The pellet compounding process was performed on a twin-screw extruder (Coperion ZSK-26Mc) with all components fed from the main throat. The compounding proceeded using a screw rotation of 200 revolutions per minute (rpm) with a throughput of 20 kilograms per hour under the conditions shown in Table 2:

**Table 2 - Compounding Conditions**

| Compounder Type | | ZSK-26Mc |
|---|---|---|
| Barrel Size | mm | 1000 |
| Die | mm | 4.4 |
| Feed (Zone 0) temperature | °C | 25-40 |
| Zone 1 temperature | °C | 50 |
| Zone 2 temperature | °C | 100 |
| Zone 3 temperature | °C | 200 |
| Zones 4-12 temperature | °C | 265 |

(continued)

| Compounder Type | | ZSK-26Mc |
|---|---|---|
| Die temperature | °C | 265 |

Injection molding was conducted on a FANUC S-2000i molding machine for various bars for mechanical (tensile/flexural/impact/HDT/etc.) testing. A Nestal Synergy 1500k-230 molding machine was used to mold test bars for the UL94 Vx FR testing. Typical injection molding conditions are listed in Table 3:

**Table 3. Typical specimen injection molding conditions.**

| **Molding parameters** | **Unit** | **Value** |
|---|---|---|
| Pre-drying time | Hour | 4 |
| Pre-drying temperature | °C | 120 |
| Zones 1-3 temperature | °C | 280 |
| Nozzle temperature | °C | 280 |
| Mold temperature | °C | 80-100 |

Specific gravity was evaluated in accordance with ASTM D792. Melt flow rate (MFR) was evaluated according to ASTM D1238 at 260 °C with a 2.16 kilogram (kg) load. Tensile properties were evaluated according to ASTM D638 at a test speed of 50 mm/min. Flexural properties were evaluated according to ASTM D790 at a test speed of 1.27 mm/min. Notched Izod impact strength (NII) was evaluated according to ASTM D256. HDT was evaluated according to ASTM D648 at a stress of 1.82 MPa and a part thickness of 3.2 mm. Flame retardance Vx was evaluated on 0.6 mm thick bars before and after aging in accordance with UL94.

Compositions were prepared and evaluated as shown in Table 4:

**Table 4 - Comparative and Example Compositions**

| **Component (wt%)** | **C1** | **Ex1** | **C2** | **C3** | **C4** | **Ex2** | **Ex3** |
|---|---|---|---|---|---|---|---|
| PC | 0.44 | 7.44 | 7.94 | 0.94 | 5.94 | 7.94 | 5.94 |
| PC-Si (20%) | 14 | | 7 | 14 | 7 | | |
| PC-Si (40%) | | 7 | | | | 7 | 7 |
| PCR-PC | 65 | 65 | 65 | 65 | 65 | 65 | 65 |
| Talc | 6 | 6 | 6 | 6 | 6 | 6 | 6 |
| BPADP | 10.5 | 10.5 | 9 | 9 | 9 | 9 | 9 |
| PPZ | | | 1 | 1 | 3 | 1 | 3 |
| ABS | 3 | 3 | 3 | 3 | 3 | 3 | 3 |
| TSAN | 0.6 | 0.6 | 0.6 | 0.6 | 0.6 | 0.6 | 0.6 |
| A01076/AO168/PETS | 0.46 | 0.46 | 0.46 | 0.46 | 0.46 | 0.46 | 0.46 |
| Total (wt%) | 100 | 100 | 100 | 100 | 100 | 100 | 100 |
| Total siloxane content | 2.8 | 2.8 | 2.8 | 2.8 | 2.8 | 2.8 | 2.8 |
| | | | | | | | |
| **Property** | | | | | | | |
| Specific gravity, g/cm$^3$ | 1.23 | 1.23 | 1.23 | 1.22 | 1.23 | 1.22 | 1.22 |
| MFR, g/10 min | 13.4 | 13.7 | 15.8 | 14.0 | 17.7 | 13.0 | 14.7 |
| Tensile modulus, MPa | 3189 | 3192 | 3075 | 3001 | 3109 | 2952 | 2987 |
| Tensile strength at yield, MPa | 62.1 | 62.1 | 64.1 | 61.6 | 63.3 | 60.5 | 60.5 |
| Tensile elongation at break, % | 15.4 | 35.8 | 55.8 | 58.8 | 34.5 | 65.9 | 45.8 |

(continued)

| Property | | | | | | | |
|---|---|---|---|---|---|---|---|
| Tensile strength at break, MPa | 43.6 | 47.1 | 48.4 | 43.0 | 45.9 | 45.8 | 44.3 |
| Flexural modulus, MPa | 2980 | 2940 | 2910 | 2890 | 2970 | 2820 | 2850 |
| Flexural strength at yield, MPa | 99.4 | 97.4 | 102 | 98.2 | 101 | 96.4 | 95.4 |
| HDT, °C | 88.8 | 89.4 | 93.1 | 91.4 | 89.0 | 92.4 | 87.3 |
| Notched Izod impact 23 °C, J/m | 99.0 | 299.0 | 87.7 | 229.0 | 81.9 | 551.0 | 367.0 |
| Notched Izod impact 0 °C, J/m | 83.4 | 100.0 | 80.7 | 94.8 | 75.5 | 112.0 | 99.1 |
| V0 at 0.6 mm, normal | >0.99 | >0.98 | >0.99 | >0.99 | >0.99 | >0.99 | >0.99 |
| | 39.0 | 49.2 | 38.8 | 41.3 | 36.0 | 45.0 | 44.2 |
| V0 at 0.6 mm, aging | >0.98 | >0.99 | >0.99 | >0.99 | >0.99 | >0.99 | >0.99 |
| | 53.1 | 41.9 | 38.9 | 40.7 | 43.9 | 35.9 | 33.8 |
| V0 at 0.6 mm | Pass | Pass | Pass | Pass | Pass | Pass | Pass |

From the results in Table 4 it is observed that the 40 wt% PC-siloxane copolymer provides good impact resistance at room temperature (23 °C) and at 0 °C as compared to the 20 wt% PC-siloxane copolymer (EXL) at the same total siloxane loading (2.8 wt%). Compare, e.g. C1 to E1. It is believed that the larger size of siloxane domain contributes to impact resistance. Other properties of the example compositions are similar to their respective comparative compositions. Compositions including both a phosphate and polyphosphazene flame retardant (BPADP and PPZ) and the 40 wt% PC-siloxane copolymer had good FR properties and impact performance (at both room temperature and 0 °C) without a substantial loss of mechanical properties. Compare C2 and C4 to Ex2 and Ex3.

It is noted that while the compositions tested herein included PCR-PC as a substantive component (65 wt%), comparative compositions including virgin polycarbonate instead of PCR-PC and the 20 wt% PC-siloxane copolymer (EXL) are known to have good impact and FR performance. As noted herein, however, the 20 wt% PC-Si copolymer does not provide sufficient impact performance when PCR-PC is used instead of virgin PC. Accordingly, as demonstrated herein the higher siloxane content PC-Si copolymer is needed to provide the desired impact and FR performance.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:

   a. from about 10 wt% to about 85 wt% of a mechanically recycled polycarbonate;
   b. from about 2 wt% to about 15 wt% of a polycarbonate-siloxane (PC-Si) copolymer, wherein the PC-Si copolymer has a siloxane content of at least 25 wt%;
   c. from about 0.1 wt% to about 20 wt% of a flame retardant component; and
   d. from about 0.01 wt% to about 2 wt% of an anti-drip agent comprising polytetrafluoroethylene (PTFE),

   wherein the combined weight percent value of all components does not exceed 100 wt%, and all weight percent values are based on the total weight of the composition.

2. The thermoplastic composition according to claim 1, wherein the composition comprises from about 50 wt% to about 85 wt% of the mechanically recycled polycarbonate.

3. The thermoplastic composition according to claim 1 or 2, wherein the PC-Si copolymer has a siloxane content of from 35 wt% to 45 wt%.

4. The thermoplastic composition according to any of claims 1 to 3, wherein the flame retardant component comprises a phosphate.

5. The thermoplastic composition according to claim 4, wherein the phosphate comprises bisphenol A bis(diphenyl phosphate) (BPADP).

6. The thermoplastic composition according to claim 4 or 5, wherein the flame retardant component further comprises polyphosphazene.

7. The thermoplastic composition according to any of claims 1 to 6, wherein the composition further comprises from greater than 0 wt% to about 75 wt% of at least one virgin polycarbonate.

8. The thermoplastic composition according to any of claims 1 to 7, wherein the PTFE comprises a styrene acrylonitrile (SAN)-encapsulated polytetrafluoroethylene (PTFE) copolymer.

9. The thermoplastic composition according to any of claims 1 to 8, wherein the composition further comprises from greater than 0 wt% to about 10 wt%, or from about 5 wt% to about 10 wt%, of an inorganic filler, wherein the inorganic filler comprises talc.

10. The thermoplastic composition according to any of claims 1 to 9, wherein the composition comprises at least one additional additive, wherein the at least one additional additive comprises an acid scavenger, an antioxidant, an antistatic agent, a chain extender, a colorant, a release agent, a flow promoter, a lubricant, a plasticizer, a quenching agent, an additional flame retardant, a UV reflecting additive, an impact modifier, a blowing agent, a reinforcing agent, or a combination thereof.

11. The thermoplastic composition according to claim 9 or 10, wherein the composition comprises from about 0.1 wt% to about 10 wt% of the at least one additional additive.

12. The thermoplastic composition according to any of claims 1 to 11, wherein the composition comprises at least 50 wt% recycled content.

13. The thermoplastic composition according to any of claims 1 to 12, wherein the composition has a V0 flame retardant rating at a thickness of 0.75 mm, or at a thickness of 0.6 mm, as evaluated in accordance with UL94.

14. The thermoplastic composition according to any of claims 1 to 13, wherein the composition has a notched Izod impact (NII) strength of at least 275 joules per meter (J/m) at 23 °C, or a NII strength of at least 95 J/m at 0 °C, as evaluated at the indicated temperature in accordance with ASTM D256.

15. An article comprising the thermoplastic composition according to any of claims 1 to 14, wherein the article is a

component of a consumer electronics device.

Europäisches Patentamt
European Patent Office
Office européen des brevets

# EUROPEAN SEARCH REPORT

Application Number
EP 24 17 1201

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/117181 A1 (SANGREGORIO ANNA [NL] ET AL) 11 April 2024 (2024-04-11) | 1-3,6,8, 10-12, 14,15 | INV. C08L69/00 |
| Y<br>A | * paragraph [0039] - paragraph [0060]; examples 1, 4; tables 3, 4 * | 9,13<br>4,5,7 | |
| Y | US 2013/317147 A1 (LI MINGFENG [CN] ET AL) 28 November 2013 (2013-11-28) | 9,13 | |
| A | * paragraph [0146] - paragraph [0147]; example 2; tables 1, 4 * | 1-8, 10-12, 14,15 | |
| A | US 2023/399509 A1 (LEE SU KYOUNG [KR] ET AL) 14 December 2023 (2023-12-14)<br>* paragraph [0067] - paragraph [0160]; examples 1-3; table 1 * | 1-15 | |
| A | US 2023/383120 A1 (CHELLAMUTHU MANOJKUMAR [US] ET AL) 30 November 2023 (2023-11-30)<br>* paragraph [0033] - paragraph [0053]; claims 11, 12; examples 10, 16; table 8 * | 1-15 | |
| | | | TECHNICAL FIELDS SEARCHED (IPC) |
| | | | C08L |

The present search report has been drawn up for all claims

1

| Place of search | Date of completion of the search | Examiner |
|---|---|---|
| The Hague | 22 October 2024 | Enescu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 17 1201

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2024

| Patent document cited in search report | Publication date | Patent family member(s) | Publication date |
|---|---|---|---|
| US 2024117181 A1 | 11-04-2024 | CN 116438255 A | 14-07-2023 |
| | | EP 4247889 A1 | 27-09-2023 |
| | | US 2024117181 A1 | 11-04-2024 |
| | | WO 2022106912 A1 | 27-05-2022 |
| US 2013317147 A1 | 28-11-2013 | CN 104334638 A | 04-02-2015 |
| | | CN 104350098 A | 11-02-2015 |
| | | CN 104364313 A | 18-02-2015 |
| | | CN 104395402 A | 04-03-2015 |
| | | CN 104395403 A | 04-03-2015 |
| | | CN 104428354 A | 18-03-2015 |
| | | CN 104583316 A | 29-04-2015 |
| | | CN 104704059 A | 10-06-2015 |
| | | CN 107434907 A | 05-12-2017 |
| | | EP 2855570 A1 | 08-04-2015 |
| | | EP 2855575 A2 | 08-04-2015 |
| | | EP 2855581 A1 | 08-04-2015 |
| | | EP 2855585 A1 | 08-04-2015 |
| | | EP 2855586 A1 | 08-04-2015 |
| | | EP 2855587 A1 | 08-04-2015 |
| | | EP 2855588 A1 | 08-04-2015 |
| | | EP 2855593 A2 | 08-04-2015 |
| | | EP 3202851 A1 | 09-08-2017 |
| | | KR 20150013758 A | 05-02-2015 |
| | | KR 20150013814 A | 05-02-2015 |
| | | KR 20150013897 A | 05-02-2015 |
| | | KR 20150023341 A | 05-03-2015 |
| | | KR 20150023453 A | 05-03-2015 |
| | | KR 20150023463 A | 05-03-2015 |
| | | US 2013313493 A1 | 28-11-2013 |
| | | US 2013317141 A1 | 28-11-2013 |
| | | US 2013317143 A1 | 28-11-2013 |
| | | US 2013317144 A1 | 28-11-2013 |
| | | US 2013317145 A1 | 28-11-2013 |
| | | US 2013317146 A1 | 28-11-2013 |
| | | US 2013317147 A1 | 28-11-2013 |
| | | US 2013317148 A1 | 28-11-2013 |
| | | WO 2013175445 A2 | 28-11-2013 |
| | | WO 2013175450 A2 | 28-11-2013 |
| | | WO 2013175451 A1 | 28-11-2013 |
| | | WO 2013175453 A1 | 28-11-2013 |
| | | WO 2013175455 A1 | 28-11-2013 |
| | | WO 2013175456 A1 | 28-11-2013 |
| | | WO 2013177497 A1 | 28-11-2013 |
| | | WO 2013177558 A1 | 28-11-2013 |

EPO FORM P0459

For more details about this annex : see Official Journal of the European Patent Office, No. 12/82

page 1 of 2

## ANNEX TO THE EUROPEAN SEARCH REPORT ON EUROPEAN PATENT APPLICATION NO.

EP 24 17 1201

This annex lists the patent family members relating to the patent documents cited in the above-mentioned European search report. The members are as contained in the European Patent Office EDP file on
The European Patent Office is in no way liable for these particulars which are merely given for the purpose of information.

22-10-2024

| Patent document cited in search report | Publication date | Patent family member(s) | Publication date |
|---|---|---|---|
| US 2023399509 A1 | 14-12-2023 | CN 117186612 A | 08-12-2023 |
| | | KR 20230168719 A | 15-12-2023 |
| | | US 2023399509 A1 | 14-12-2023 |
| US 2023383120 A1 | 30-11-2023 | CN 117126522 A | 28-11-2023 |
| | | EP 4282919 A1 | 29-11-2023 |
| | | US 2023383120 A1 | 30-11-2023 |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS*, 80-05-7
- *CHEMICAL ABSTRACTS*, 25037-45-0
- *CHEMICAL ABSTRACTS*, 111211-39-3
- *CHEMICAL ABSTRACTS*, 202483-49-6
- *CHEMICAL ABSTRACTS*, 14807-96-6
- *CHEMICAL ABSTRACTS*, 5945-33-5
- *CHEMICAL ABSTRACTS*, 1184-10-7
- *CHEMICAL ABSTRACTS*, 9003-56-9
- *CHEMICAL ABSTRACTS*, 9002-84-0/9003-54-7
- *CHEMICAL ABSTRACTS*, 2082-79-3
- *CHEMICAL ABSTRACTS*, 31570-04-4
- *CHEMICAL ABSTRACTS*, 115-83-3